Europäisches Patentamt

European Patent Office

Office européen des brevets

(19)

(11) Numéro de publication: **0 528 013 B1**

(12)

# FASCICULE DE BREVET EUROPEEN

(45) Date de publication de fascicule du brevet: **22.02.95**   (51) Int. Cl.⁶: **E21B 34/10**, F16K 37/00, G01D 18/00

(21) Numéro de dépôt: **92907329.4**

(22) Date de dépôt: **05.03.92**

(86) Numéro de dépôt internationale :
**PCT/FR92/00203**

(87) Numéro de publication internationale :
**WO 92/15768 (17.09.92 92/24)**

(54) **METHODE DE VERIFICATION DU BON FONCTIONNEMENT D'UNE VANNE DE SECURITE D'UN PUITS PETROLIER.**

(30) Priorité: **08.03.91 FR 9102839**

(43) Date de publication de la demande:
**24.02.93 Bulletin 93/08**

(45) Mention de la délivrance du brevet:
**22.02.95 Bulletin 95/08**

(84) Etats contractants désignés:
**AT BE CH DE DK ES FR GB GR IT LI LU NL SE**

(56) Documents cités:
**GB-A- 2 175 374**
**US-A- 3 653 254**
**US-A- 4 448 216**
**US-A- 4 542 649**

(73) Titulaire: **SOCIETE NATIONALE ELF AOUITAI-NE (PRODUCTION)**
**Tour Elf,**
**2, Place de la Coupole,**
**La Défense 6**
**F-92400 Courbevoie (FR)**

(72) Inventeur: **FERRY, Jean-Claude**
**10, rue Rimbaud**
**F-64000 Pau (FR)**

(74) Mandataire: **Timoney, Ian Charles Craig**
**SOCIETE NATIONALE ELF AOUITAINE (PRO-DUCTION),**
**Tour Elf,**
**Cédex 45**
**F-92078 Paris La Défense (FR)**

EP 0 528 013 B1

## Description

La présente invention se rapporte à une méthode de vérification du bon fonctionnement d'une vanne de sécurité d'un puits pétrolier.

Conformément aux normes de sécurité, une tête de puits de production doit être équipée d'une vanne de sécurité disposée dans le puits à environ 30 mètres en-dessous de la surface du sol ou du fond marin. Cette vanne, la plupart du temps actionnée hydrauliquement, est destinée à fermer le puits en cas d'accident grave, par exemple en cas d'éruption.

De manière générale, une telle vanne est conçue pour avoir une position de repos fermée, la vanne étant maintenue dans une position ouverte sous l'effet de la pression hydraulique envoyée depuis la surface par une ligne hydraulique située le long de la colonne de production. En cas de nécessité, on annule la pression hydraulique, ce qui entraîne alors la fermeture de la vanne. Ainsi, tout incident ou destruction au niveau de la tête de puits entraîne de cette façon la fermeture automatique de la vanne de sécurité.

Une telle vanne constituant un élément essentiel à la sécurité d'un puits, il est nécessaire de contrôler périodiquement le bon fonctionnement de la vanne et du système de commande hydraulique. Toutefois, actionner la vanne ne suffit pas dans le cas présent car on ne peut détecter de manière certaine un éventuel disfonctionnement, tel qu'une ouverture partielle qui pourrait conduire, après une période de production, à la mise hors service de la vanne.

La présente invention a donc pour but une méthode de vérification du bon fonctionnement d'une vanne de sécurité d'un puits, après sa première mise en place et ultérieurement afin d'effectuer au mieux sa maintenance.

Pour ce faire, l'invention propose une méthode de vérification du bon fonctionnement d'une vanne de puits pétrolier située en profondeur caractérisée en ce qu'elle comprend les étapes suivantes :

- réalisation préalable d'une courbe de l'évolution de la pression hydraulique en fonction du temps ou du volume pompé pour une vanne dans un état optimal,
- réalisation d'une courbe analogue pour ladite vanne après son installation dans le puits,
- comparaison des deux courbes afin de déduire un bon état de fonctionnement ou un disfonctionnement éventuel de la vanne située en profondeur.

D'autres particularités et avantages de la présente invention apparaîtront plus clairement à la lecture de la description ci-après faite en référence aux dessins annexés dans lesquels :

- la figure 1 est une vue schématique d'un dispositif permettant la mise en oeuvre de la méthode de la présente invention ; et
- les figures 2A, 2B, 3A et 3B sont des courbes obtenues avec le dispositif de la figure 1.

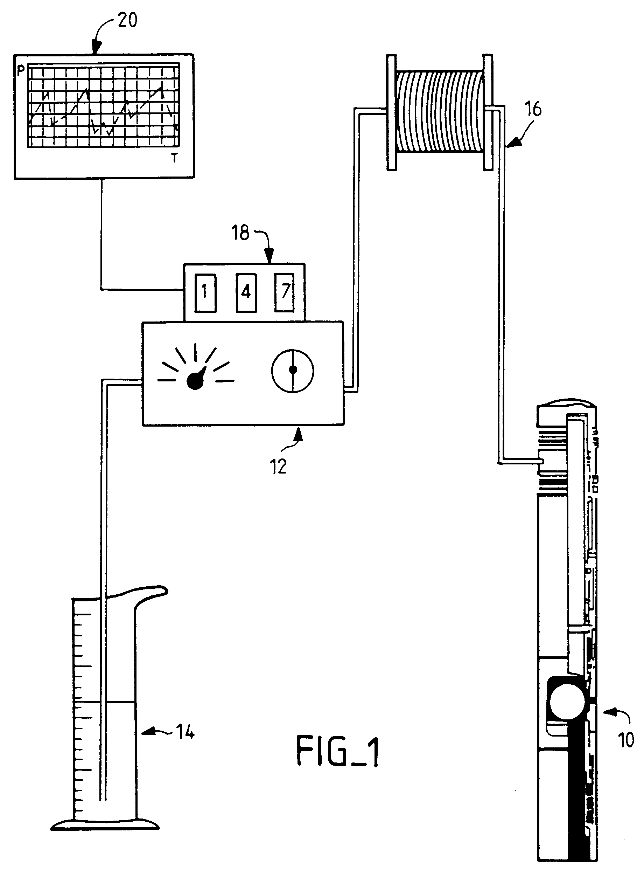

Sur la figure 1 est représenté schématiquement un circuit hydraulique comportant une vanne de sécurité 10 destinée à être disposée en profondeur. Une pompe volumétrique 12 envoie un liquide hydraulique 14 à travers une ligne de contrôle 16 vers la vanne 10. La pression hydraulique fournie par la pompe 12 est mesurée par un manomètre 18 et la variation de ladite pression au cours du temps est visualisée au moyen d'un enregistreur 20.

Dans l'exemple illustré, la ligne de contrôle possède un diamètre de 0,6 cm et une longueur de 120 m. Sa commande est assurée par une huile de marque SUBHYDRELF et une pompe volumétrique GILSON à débit constant. La sortie est constituée par un enregistreur papier ; cependant, on peut également utiliser un écran d'ordinateur ou tout autre moyen de visualisation.

La méthode propose tout d'abord de réaliser à l'aide de ce dispositif une courbe $P = f(t)$, P étant la pression hydraulique appliquée à la vanne et t le temps, lorsque, ladite vanne étant fermée, on effectue une ouverture, une observation d'étanchéité et une fermeture de ladite vanne. Cette réalisation préalable peut se faire en usine, à l'atelier ou sur le site. Selon l'invention, on compare alors deux courbes, l'une obtenue en agissant sur une vanne dans un état mécanique connu et l'autre sur cette même vanne en état de fonctionnement en profondeur dans un puits. Des dissemblances entre les deux courbes permettent alors de diagnostiquer, lorsque la vanne est située en profondeur, un défaut de cyclage ainsi que tout frottement anormal, point dur, fuite, annonçant un disfonctionnement réel ou latent.

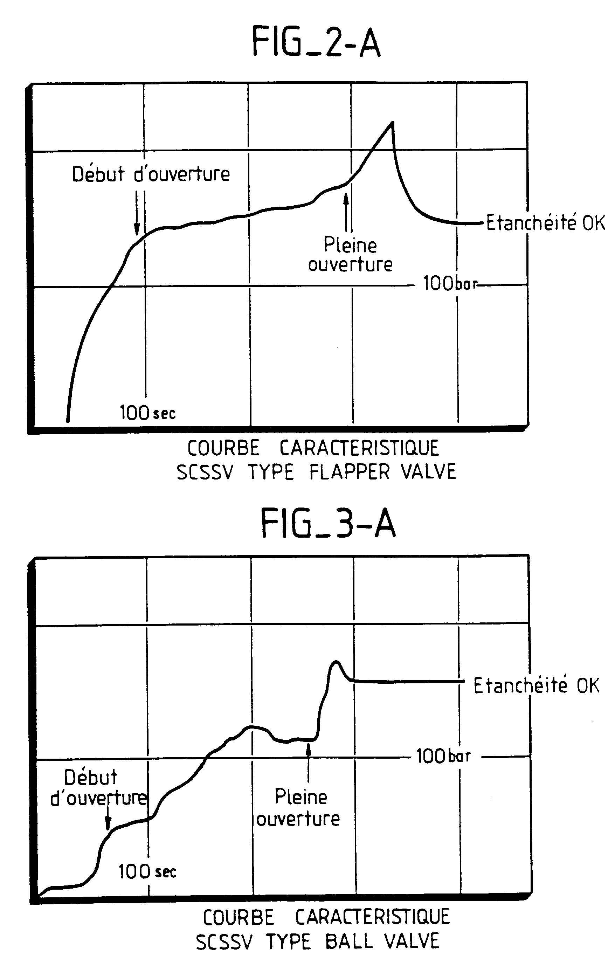

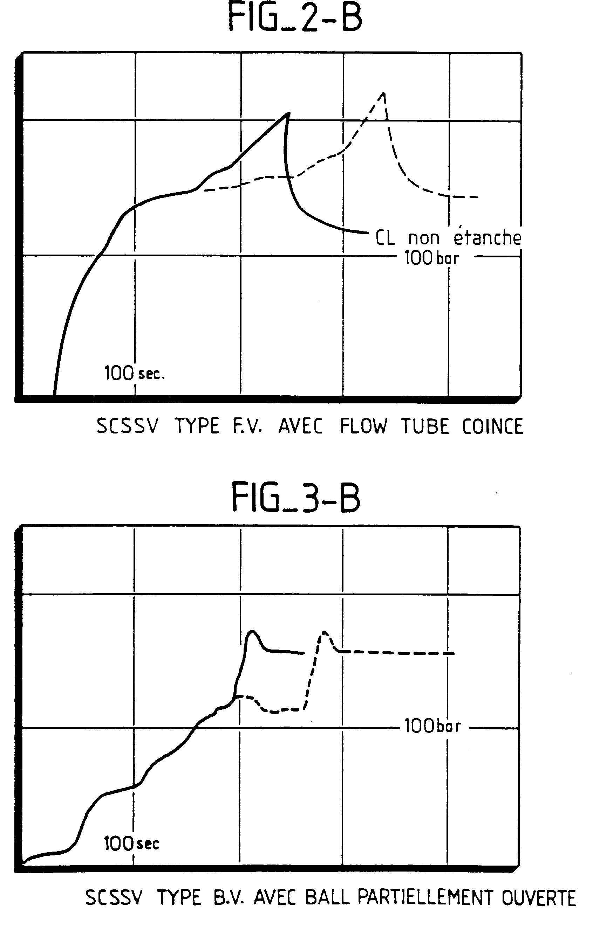

Les figures 2A, 2B, 3A et 3B sont des courbes explicatives de la présente méthode. La paire de courbes 2A et 2B représente l'évolution de la pression hydraulique fournie à une vanne dans un état mécanique connu, dans le cas d'une vanne à bille (2A) et d'une vanne à clapet (3A). Dans les deux cas, il existe une première phase d'augmentation progressive de la pression hydraulique traduisant l'ouverture de la vanne, puis, après arrêt de la pompe, une phase de stabilisation de ladite pression doit être observée pour signifier l'intégrité de l'ensemble du circuit hydraulique. Subséquemment, à la fermeture de la vanne, on doit récupérer le même volume d'huile hydraulique en retour.

La paire de courbes 2B et 3B reprend en traits pointillés les courbes respectivement 2A et 3A et représente en traits pleins le même type de courbe correspondant au même type de vanne présentant désormais un disfonctionnement. Ainsi, la vanne à clapet de la courbe 2B s'ouvre de manière incomplète ; on constate alors sur cette courbe que la vanne défaillante présente une avance dans le temps en ce qui concerne son ouverture totale, avance représentée par la montée brutale en pression, le disfonctionnement se trouvant de ce fait aisément décelable et représentatif d'une vanne incomplètement ouverte. On note également une fuite au niveau du système hydraulique de la vanne, étant donné que la pression ne se stabilise pas à l'arrêt de la pompe. La vanne à bille de la courbe 3B présente également une ouverture incomplète, le disfonctionnement apparaissant manifeste à la comparaison des courbes 3A et 3B ; en revanche, cette vanne possède un système hydraulique étanche, car il y a stabilisation finale de la pression.

De plus, tout type d'imperfection mécanique est décelable par cette méthode, et se traduit par une différence entre la courbe relative à la vanne initiale et la courbe relative à la vanne présentant une imperfection, cette différence étant susceptible d'apparaître sous forme d'un décalage entre les deux courbes, ou encore d'une amplification, d'une diminution ou d'une distorsion d'une courbe par rapport à l'autre.

Ainsi, l'opération délicate et coûteuse consistant à remonter la vanne à la surface est effectuée uniquement dans le cas où l'homme du métier possède la certitude que ladite vanne présente un disfonctionnement. Avec un ordinateur portable possédant en mémoire les courbes caractéristiques de plusieurs types de vannes dans un état mécanique connu, il sera aisé pour l'homme du métier d'apporter un diagnostic immédiat sur le site même du puits, et ainsi d'assurer une maintenance plus efficace de cet équipement légal qu'est une vanne de sécurité de puits pétrolier.

## Revendications

1. Méthode de vérification du bon fonctionnement d'une vanne de puits pétrolier située en profondeur, la vanne étant munie d'une ligne de contrôle caractérisée en ce qu'elle comprend les étapes suivantes :
   - réalisation préalable d'une courbe de l'évolution de la pression hydraulique appliquée à la ligne de contrôle pendant une ouverture et une fermeture de la vanne en fonction du temps ou du volume pompé pour une vanne dans un état optimal,
   - réalisation d'une courbe analogue pour ladite vanne après son installation dans le puits,
   - comparaison des deux courbes afin de déduire un bon état de fonctionnement ou un disfonctionnement éventuel de la vanne.

2. Méthode selon la revendication 1 caractérisée en ce que la détection d'une quelconque différence entre les deux courbes permet de conclure à un disfonctionnement de la vanne.

3. Méthode selon les revendications 1 et 2 caractérisée en ce que la détection d'un type de différence entre les deux courbes permet de conclure à un type précis de disfonctionnement associé de la vanne.

## Claims

1. Method for checking the good operation of a valve for an oil well located at depth, the valve being provided with a control line, characterised in that it comprises the following steps:
   - preliminary production of a curve of the hydraulic pressure development applied to the control line during the opening and closing of the valve as a function of the time or the volume pumped, in the case of a valve in an optimum state;
   - production of an analogous curve for the said valve after the installation thereof in the well;
   - comparison of the two curves in order to deduce a good state of operation or a possible malfunctioning of the valve.

2. Method according to Claim 1, characterised in that the detection of any difference between the two curves allows a malfunctioning of the valve to be deduced.

3. Method according to Claims 1 and 2, characterised in that the detection of one type of difference between the two curves allows a precise type of malfunctioning, associated with the valve, to be deduced.

## Patentansprüche

1. Verfahren zum Überprüfen der Funktionstüchtigkeit eines in der Tiefe befindlichen Ventils eines Erdölbohrschachts, wobei das Ventil mit einer Kontrolleitung versehen ist, dadurch gekennzeichnet, daß es die folgenden Schritte aufweist:
   - vorheriges Erstellen einer Kurve der Entwicklung des hydraulischen Drucks, der an die Kontrolleitung während eines Öffnens und eines Schließens des Ventils angelegt wird, als Funktion der Zeit oder des gepumpten Volumens bei einem Ventil in einem optimalen Zustand,
- Erstellen einer analogen Kurve für das Ventil nach seiner Installierung in dem Schacht,
- Vergleich der beiden Kurven, um daraus einen guten Funktionszustand oder eine eventuelle Fehlfunktion des Ventils abzuleiten.

2. Verfahren nach Anspruch 1, dadurch gekennzeichnet, daß es das Erfassen irgendeines Unterschieds zwischen den beiden Kurven erlaubt, auf eine Fehlfunktion des Ventils zu schließen.

3. Verfahren nach den Ansprüchen 1 und 2, dadurch gekennzeichnet, daß es das Erfassen einer Art des Unterschieds zwischen den beiden Kurven erlaubt, auf eine bestimmte, dem Ventil zugeordnete Fehlfunktionsart zu schließen.

FIG_1

# FIG_2-A

COURBE CARACTERISTIQUE
SCSSV TYPE FLAPPER VALVE

# FIG_3-A

COURBE CARACTERISTIQUE
SCSSV TYPE BALL VALVE

# FIG_2-B

CL non étanche
100 bar
100 sec.

SCSSV TYPE F.V. AVEC FLOW TUBE COINCE

# FIG_3-B

100 bar
100 sec

SCSSV TYPE B.V. AVEC BALL PARTIELLEMENT OUVERTE